# EUROPEAN PATENT APPLICATION

(11) **EP 4 180 714 A1**
(43) Date of publication of application: **17.05.2023**
(21) Application number: 22204114.7
(22) Date of filing: 27.10.2022
(51) Int. Cl.: F21V 29/10, F21V 29/77, F21V 23/00, F21V 23/04, F21V 23/06, F21S 9/02, F21S 8/06, F21Y 115/10, H01R 4/48

(54) **LIGHTING UNIT**

(30) Priority: 02.11.2021 GB 202115723
(71) Applicant: Collingwood Lighting Limited, Northampton, Northamptonshire NN6 0BT (GB)
(72) Inventor: COLOMBO, Ricardo, Northampton, NN6 0BT (GB); JOHNSON, Mark, Northampton, NN6 0BT (GB)
(74) Representative: Murgitroyd & Company

(57) **Abstract**

A high bay lighting unit, including: at least one solid-state light source (3), which is arranged to output at least 10,000 lumens in normal operation; a heatsink (5) arranged to conduct heat away from the solid-state light source (3); a driver housing (27) mounted to a rear side of the heatsink (5); a driver (7) arranged to convert a mains input signal to an output signal that is suitable for powering the at least one solid-state light source (3), wherein the driver (7) is located within the driver housing (27); at least one electrochemical cell (9); a switching circuit (11) arranged to detect loss of a mains input signal and/or loss of an output signal from the driver (7), and in response to detecting loss of a mains input signal and/or loss of an output signal from the driver (7), the switching circuit (11) is arranged to provide power to the at least one solid-state light source (3) from the at least on electrochemical cell (9); a connection housing (31) for housing the at least one electrochemical cell (9), the switching circuit (11), and a plurality of terminal blocks (57a-f), wherein the connection housing (31) is mounted to a rear side of the driver housing (27); a plurality of electrical connectors (13) protruding outwards from the connection housing (31), each electrical connector (13) having a first side (43a), which is a supply side, and a second side (43b), which is the lighting unit side, and a set of first manually operable actuators (49a) arranged to secure electrical wires to the first side (43a) of the electrical connector, wherein the first side (43a) of each electrical connector and the set of first manually operable actuators (49a) are located outside of the connection housing (31); and wherein at least some of the terminal blocks (57a-f) are electrically connected to the second side (43b) of at least one of the electrical connectors, and to at least one of the switching circuit (11) and the driver (7) by assembled electrical connections.

## Description

The invention relates to a lighting unit for example a high-power lighting unit that is suitable for use a relatively large building.

Large buildings, such as warehouses, hangers, factories, etc often require an array of high-power lights to illuminate a space inside the building. Such lights typically have a light output in excess of 10,000 lumens, and are sometimes referred to as "high bay" lights since they are typically located adjacent a ceiling/roof high above floor level. Modern high bay lights usually have solid-state light sources, such as an LED light sources, because LED light sources are very efficient.

A proportion of high bay lights are typically required to remain illuminated in the event of loss of mains power, to enable people within the building to move safely around. This type of light can be very difficult and time consuming to install because the installer is working at height, there are several incoming and outgoing wires to electrically connect, including electrical connections that the installer needs to make within the lighting unit for the light to operate correctly. This can be very time consuming work, often requiring the use of several tools, and the operation is sufficiently complex that wiring mistakes are not uncommon, which slows up installation and can lead to remedial work. The situation is exacerbated for emergency high bay lights that are dimmable and / or include additional electrical equipment.

Accordingly the invention seeks to provide a lighting unit that mitigates at least one of the above-mentioned problems, or at least provides alternative arrangement to known lighting assemblies.

According to one aspect, there is provided a high bay lighting unit according to claim 1. A lighting unit is sometimes referred to as a "luminaire". The invention provides a lighting unit having internal wiring that is installed at the time of manufacturing and assembling the lighting unit. It provides all of the wiring needs for the installer which means that the installer does not have to provide additional junction boxes and connectors, which significantly simplifies the installation process. The invention reduces installation time, and reduces the possibility of wiring mistakes occurring. The electrical connectors included in the lighting assembly are externally accessible to the installer and provide very quick and easy connection of electrical wires, and do not require tools to attach the wires. Since the switch circuit is arranged to power the at least one solid-state lighting device via the at least one electrochemical cell in the event of a loss of mains power, the lighting assembly functions as an emergency light, which is capable of illumination in the event of mains failure. The emergency light enables people in the building to continue their tasks or to exit a building as required. The invention provides an integrated lighting unit with power and control circuits mounted within the luminaire, which means the luminaire is easy to install as only a single unit has to be installed.

According to another aspect, there is provided a lighting assembly.

The lighting assembly can include at least one solid-state light source. The solid-state light source can comprise at least one LED light source, such as at least one LED chip.

The lighting assembly can include a heatsink. The heat sink can be arranged to conduct heat away from the solid-state light source.

The lighting assembly can include a driver. The driver can be arranged to convert a mains input signal to an output signal that is suitable for powering the at least one solid-state light source. The driver can be a dimmable driver.

The lighting assembly can include at least one electrochemical cell. For example, the lighting assembly can include a battery, such as a rechargeable battery.

The lighting assembly can include a switching circuit. The switching circuit can be arranged to detect loss of a mains input signal and/or loss of an output signal from the driver. The switching circuit can be arranged to, in response to detecting loss of a mains input signal and/or loss of an output signal from the driver, provide power to the at least one solid-state light source from the at least on electrochemical cell.

The lighting assembly can include a first electrical connector having a first side and a second side. The first side can be a supply side. The second side can be the lighting assembly side. The first electrical connector can include a set of first manually operable actuators arranged to secure electrical wires to the first side of the first electrical connector. The second side of the electrical connector can be electrically connected to at least one of the switching circuit and the driver, for example by assembled electrical conn ections.

By "assembled electrical connections" it is meant electrical connections that are included in the lighting assembly at the time of manufacture and assembly of the lighting assembly. The assembled electrical connections are applied in a controlled manufacturing assembly environment in accordance with a predetermined circuit design. This contrasts with ad hoc electrical connections applied by an installer at the time of installation. The first electrical connector can include screw elements arranged to secure electrical wires to the first side of the first electrical connector.

The electrical connector can be arranged to receive, at the first side, one of: a mains electrical supply cable; a dimming signal cable; a loop in/loop out cable; an alternative switch live cable; and a sensor cable.

The lighting assembly can include a second electrical connector having a first side and a second side. The first side can be a supply side. The second side can be the lighting assembly side. The second electrical connector can include a set of first manually operable actuators arranged to secure electrical wires to the first side of the second electrical connector. The second electrical connector can be arranged to receive, at the first side, another one of: the mains electrical supply cable; the dimming signal cable; the loop in/loop out cable; the alternative switch live cable; and the sensor cable. The second electrical connector can include screw elements arranged to secure electrical wires to the first side of the first electrical connector.

The lighting assembly can include a third electrical connector having a first side and a second side. The first side can be a supply side. The second side can be the lighting assembly side. The third electrical connector can include a set of first manually operable actuators arranged to secure electrical wires to the first side of the third electrical connector. The third electrical connector can be arranged to receive, at the first side, another one of: the mains electrical supply cable; the dimming signal cable; the loop in/loop out cable; the alternative switch live cable; and the sensor cable. The third electrical connector can include screw elements arranged to secure electrical wires to the first side of the first electrical connector.

The lighting assembly of any one of the preceding claims, including a fourth electrical connector having a first side and a second side. The first side can be a supply side. The second side can be the lighting assembly side. The fourth electrical connector can include a set of first manually operable actuators arranged to secure electrical wires to the first side of the fourth electrical connector. The fourth electrical connector can be arranged to receive at the first side another one of: the mains electrical supply cable; the dimming signal cable; the loop in/loop out cable; the alternative switch live cable; and the sensor cable. The fourth electrical connector can include screw elements arranged to secure electrical wires to the first side of the first electrical connector.

The lighting assembly of any one of the preceding claims, including a fifth electrical connector having a first side and a second side. The first side can be a supply side. The second side can be the lighting assembly side. The fifth electrical connector can include a set of first manually operable actuators arranged to secure electrical wires to the first side of the fifth electrical connector. The fifth electrical connector can be arranged to receive at the first side another one of: the mains electrical supply cable; the dimming signal cable; the loop in/loop out cable; the alternative switch live cable; and the sensor cable. The fifth electrical connector can include screw elements arranged to secure electrical wires to the first side of the first electrical connector.

The lighting assembly can include a live terminal block. The live terminal block can be electrically connected to the second side of at least one of: the first, second, third, fourth and fifth electrical connectors. The live terminal block can be connected to at least one of the switching circuit and the driver. The live terminal block can be electrically connected to the second side of a plurality of the electrical connectors. For example, the live terminal block can be electrically connected to the electrical connector arranged to receive the mains supply cable at its first side. The live terminal block can be electrically connected to the electrical connector arranged to receive the loop in/loop out cable at its first side. The live terminal block can be electrically connected to the electrical connector arranged to receive the sensor cable at its first side. Each of the electrical connections can be an assembled electrical connection, and therefore the installer is not required to make these connections during installation.

The lighting assembly can include a neutral terminal block. The neutral terminal block can be electrically connected to the second side of at least one of the first, second, third, fourth and fifth electrical connectors. The neutral terminal block can be electrically connected to at least one of the switching circuit and the driver. The neutral terminal block can be electrically connected to the second side of a plurality of the electrical connectors. For example, the neutral terminal block can be electrically connected to the electrical connector arranged to receive the mains supply cable at its first side. The neutral terminal block can be electrically connected to the electrical connector arranged to receive the loop in/loop out cable at its first side. The neutral terminal block can be electrically connected to the electrical connector arranged to receive the alternative switch live cable at its first side. The neutral terminal block can be electrically connected to the electrical connector arranged to receive the sensor cable at its first side. Each of the electrical connections can be an assembled electrical connection, and therefore the installer is not required to make these connections during installation.

The lighting assembly can include a switch live terminal block. The switch live terminal block can be electrically connected to the second side of at least one of: the first, second, third, fourth and fifth electrical connectors. The switch live terminal block can be electrically connected to the switch circuit. The switch live terminal block can be electrically connected to the second sides of a plurality of the electrical connectors. For example, the switch live terminal block can be electrically connected to the electrical connector arranged to receive the mains supply cable at its first side. The switch live terminal block can be electrically connected to the electrical connector arranged to receive the loop in/loop out cable at its first side. The switch live terminal block can be electrically connected to the electrical connector arranged to receive the alternative switch live cable at its first side. The switch live terminal block can be electrically connected to the electrical connector arranged to receive the sensor cable at its first side. Each of the electrical connections can be an assembled electrical connection, and therefore the installer is not required to make these connections during installation.

The lighting assembly can include a positive low voltage terminal block. The positive low voltage terminal block can be electrically connected to the second side of at least one of the first, second, third, fourth and fifth electrical connectors. The positive low voltage terminal block can be electrically connected to the driver. The positive low terminal block can be electrically connected to the second sides of a plurality of the electrical connectors. For example, the positive low voltage terminal block can be electrically connected to the electrical connector arranged to receive the dimming cable. The positive low voltage terminal block can be electrically connected to the electrical connector arranged to receive the sensor cable. Each of the electrical connections can be an assembled electrical connection, and therefore the installer is not required to make these connections during installation. The input signal provided to the low voltage terminal blocks can be typically in the range 1 to 10 V, however other suitable ranges can be used, for example 1 to 24V.

The lighting assembly can include a negative low voltage terminal block. The negative low voltage terminal block can be electrically connected to the second side of at least one of the first, second, third, fourth and fifth electrical connectors. The negative low voltage terminal block can be electrically connected to the driver. The negative low terminal block can be electrically connected to the second sides of a plurality of the electrical connectors. For example, the negative low voltage terminal block can be electrically connected to the electrical connector arranged to receive the dimming cable. The negative low voltage terminal block can be electrically connected to the electrical connector arranged to receive the sensor cable. Each of the electrical connections can be an assembled electrical connection, and therefore the installer is not required to make these connections during installation. The input signal provided to the low voltage terminal blocks can be typically in the range 1 to 10 V, however other suitable ranges can be used, for example 1 to 24V.

The lighting assembly can include an earth terminal block. The earth terminal block can be electrically connected to the second side of at least one of the first, second and third, fourth and fifth electrical connectors. The earth terminal block can be electrically connected to the second sides of a plurality of the electrical connectors. For example, the earth terminal block can be electrically connected to the electrical connector arranged to receive the mains supply cable at its first side. The earth terminal block can be electrically connected to the electrical connector arranged to receive the loop in/loop out cable at its first side. The earth terminal block can be electrically connected to the electrical connector arranged to receive the alternative switch live cable at its first side. Each of the electrical connections can be an assembled electrical connection, and therefore the installer is not required to make these connections during installation.

The earth terminal block can be electrically connected to at least one of the switching circuit and the driver.

The lighting assembly can include a sensor. The sensor can be arranged to detect at least one of movement, for example the movement of people, and ambient light level. The sensor can be a microwave sensor or any other suitable sensor for detecting movement of people and/or light level. The sensor can be connected to one of the first, second, third, fourth and fifth electrical connectors via a sensor cable.

It will be apparent from the above discussion that each of the first, second, third, fourth and fifth electrical connectors, at their respective second sides, can be electrically connected to at least some of: the live terminal block, the neutral terminal block, the switch live terminal block, the earth terminal block, the positive low voltage terminal bock, the negative low voltage terminal block, the switch circuit and the driver, via assembled electrical conn ections.

In some embodiments, for the electrical connector having a mains supply cable connected to its first side, the second side of that electrical connector can be connected to the live terminal block, the neutral terminal block, the switch live terminal block, and the earth terminal block.

In some embodiments, for the electrical connector having a loop in/loop out cable connected to its first side, the second side of that electrical connector can be connected to the live terminal block, the neutral terminal block, the switch live terminal block, and the earth terminal block.

In some embodiments, for the electrical connector having an alternative switch live supply cable connected to its first side, the second side of that electrical connector can be connected to the neutral terminal block, the switch live terminal block, and the earth terminal block.

In some embodiments, for the electrical connector having a dimming cable connected to its first side, the second side of that electrical connector can be connected to the positive low voltage terminal block and to the negative low voltage terminal block.

In some embodiments, for the electrical connector having a sensor cable connected to its first side, the second side of that electrical connector can be connected to the positive low voltage terminal block and to the negative low voltage terminal block.

At least one of the electrical connectors can include a set of second manually operable actuators arranged to secure electrical wires to the second side of the electrical connector. This assists with ease of manufacture and assembly of the lighting unit. Typically, a plurality of the electrical connectors includes a set of second manually operable actuators arranged to secure electrical wires to the second side of the electrical connector. At least one of the electrical connectors can include screw elements arranged to secure electrical wires to the second side of the electrical connector.

Each electrical connector can include a body having a plurality of axial cavities. Each axial cavity can include a respective electrically conductive member. Each electrically conductive member can include a first end. The first end can be resiliently deformable. The first end of the electrically conductive member can be located at the first side of the body.

Each electrically conductive member can be provided with a respective one of the first manually operable actuators, for example at a first side of the electrical connector. Each first manually operable actuator can be movable to a first position, wherein the respective first end of the conductive member is loaded by the respective first manually operable actuator thereby resiliently deforming the respective first end of the conductive member to allow a wire to be inserted into the respective cavity at a first side of the body. Each first manually operable actuator can be movable to a second position, wherein the load on the respective first end of the conductive member can be released thereby causing the respective first end of the electrically conductive member to engage the wire inserted into the respective cavity at the first side to form an electrical connection between the wire and the respective conductive member. Each electrically conductive member can be provided with a respective screw element to connect a wire to the first end of the conductive element.

Each electrically conductive member can include a second end. The second end can be resiliently deformable. Each second end can be located at the second side of the body.

Each electrically conductive member can be provided with a respective one of the second manually operable actuators, for example at a second side of the electrical connector. Each electrically conductive member can be movable to a first position, wherein the respective second end of the conductive member is loaded by the respective second manually operable actuator thereby resiliently deforming the respective second end of the conductive member to allow a wire to be inserted into the respective cavity at a second side of the body. Each electrically conductive member can be movable to a second position wherein the load on the respective second end of the conductive member can be released thereby causing the respective second end of the electrically conductive member to engage the wire inserted into the respective cavity at the second side to form an electrical connection between the wire and the respective conductive member. Each electrically conductive member can be provided with a respective screw element to connect a wire to the second end of the conductive element.

Each first manually operable actuator can comprise a lever. Each second manually operable actuator can comprise a lever. Each lever can be pivotally attached to a respective electrical connector body. The levers can be arranged to pivot to the first position and to the second position.

The switching circuit can be electrically connected to the at least one electrochemical cell.

The switching circuit can be electrically connected to an input side of the driver. For example, the mains input signal can be provided to the driver via the switching circuit. Live and neutral assembled electrical connections can be provided between the switching circuit and the driver.

An output side of the driver is electrically connected to the at least one solid-state light source. The output side of the driver can be electrically connected to the switching circuit. Accordingly an output signal from the driver can be delivered to the solid-state light source via the switching circuit. For example, an output cable from the driver can be electrically connected to the second side of a further electrical connector, and a cable from the switch circuit can be electrically connected to a first side of the further electrical connector. Each of the electrical connections can be an assembled electrical connection, and therefore the installer is not required to make these connections during installation.

The switch circuit can be electrically connected to the solid-state light source. For example, a cable from the switch circuit can be electrically connected to the first side of a further electrical connector, and an electrical cable from the solid-state lighting unit can be electrically connected to a second side of the further connector. Each of the electrical connections can be an assembled electrical connection, and therefore the installer is not required to make these connections during installation.

In normal operation, when the lighting assembly is powered from the mains, a mains input signal is provided to the driver via the switching circuit. The driver converts the mains input signal to an output signal that is suitable for use by the at least one solid-state light source, and the driver output signal is supplied to the at least one solid-state light source. For embodiments including a motion sensor, the output signal from the driver can be selectively supplied to the at least one solid-state light source according to signals received from the motion sensor. For example, if the driver determines from the signals received from the motion sensor that the space below the lighting assembly is unoccupied, the driver can automatically switch off the at least one solid-state light source to save energy. If the driver determines from the signals received from the motion sensor that the space below the lighting assembly is occupied and/or that the measured light level is lower than or equal to a threshold value, the driver can power the at least one solid-state light source to illuminate the space below the lighting assembly.

The lighting assembly can include a housing for housing the driver. The driver housing can be mounted to a rear side of the heatsink. An air gap can be provided between the heatsink and driver housing to thermally insulate the driver housing from the heatsink.

A tubular shroud can be mounted about the driver housing. The tubular shroud can include a plurality of apertures to promote air flow over the driver housing.

The lighting assembly can include a connection housing for housing the switch circuit and/or the at least one electrochemical cell. The connection housing can house terminal blocks. The connection housing can house at least some of the wiring connected to the terminal blocks. The connection housing can be mounted to a rear side of the driver housing. This helps to provide an integrated lighting unit, while at the same time distancing the switch circuit and/or the at least one electrochemical cell from heat generated by the solid-state light source.

The tubular shroud can be arranged to visually obscure parts of cables extending between the driver housing and the connection housing.

At least one of the first, second, third, fourth and fifth electrical connectors can be attached to the connection housing. At least one of the first, second, third, fourth and fifth electrical connectors can protrude outwards from the connection housing. This enables the installer to easily access the electrical connectors. External wires, such as the mains supply cable, dimming cable, loop in/loop out cable, alternative switch live cable, and sensor cable, can be connected to the lighting assembly without having to open the connection housing. The cables are quickly connected using the quick connect electrical connectors.

The connection housing can include at least one removable wall to access the interior of the connection housing. For example, a top wall can be screwed to at least one side wall. An end wall can be screwed to at least one side wall. This enables access to the at least one electrochemical cell, which aids construction of the lighting assembly, and facilitates installation of a replacement electrochemical cell.

The lighting assembly can include a hanging eye. The hanging eye can be attached to an upper part of the connection housing, for example on the top wall. The hanging eye is arranged to support the weight of the lighting unit. For example, a chain can be attached to the hanging eye to support the weight of the lighting unit, for example from a ceiling.

The lighting assembly can include a formation that is arranged to engage with a beam formation, thereby suspending the lighting assembly from the beam. This enables the lighting assembly to be surfaced mounted to a beam. The lighting assembly can include a formation that is arranged to engage with a trunking formation, thereby suspending the lighting assembly from trunking. This enables the lighting assembly to be surfaced mounted to trunking.

At least one of the electrical connectors can include a cable grip. At least some electrical connectors can include a plurality of cable grips.

The lighting assembly can include a test button and indicator light to enable a user to manually check an operational status of the at least one electrochemical cell.

The at least one solid-state light source can produce at least 10,000 lumens, preferably at least 12,000 lumens, and more preferably still at least 15,000 lumens.

The lighting assembly can comprise, or consist of, a lighting unit, and preferably a high bay lighting unit.

According to another aspect there is provided a lighting unit, such as a high bay lighting unit.

The lighting unit can include at least one solid-state light source. The solid-state lighting unit can be arranged to output at least 10,000 lumens in normal operation.

The lighting unit can include a heatsink. The heat sink can be arranged to conduct heat away from the solid-state light source. The heat sink can be mounted on a rear side of the solid-state light source such that heat can be conducted into the heat sink.

The lighting unit can include a driver housing. The driver housing can be mounted to a rear side of the heatsink.

The lighting unit can include a driver. The driver can be arranged to convert a mains input signal to an output signal that is suitable for powering the at least one solid-state light source. The driver can be located within the driver housing.

The lighting unit can include at least one electrochemical cell.

The lighting unit can include a switching circuit. The switching circuit can be arranged to detect loss of a mains input signal and/or loss of an output signal from the driver. In response to detecting loss of a mains input signal and/or loss of an output signal from the driver, the switching circuit can be arranged to provide power to the at least one solid-state light source from the at least one electrochemical cell.

The lighting unit can include a connection housing. The connection housing can house the least one electrochemical cell. The connection housing can house the switching circuit. The connection housing can house a plurality of terminal blocks. The connection housing can be mounted to a rear side of the driver housing.

The lighting unit can include at least one electrical connector, and preferably a plurality of electrical connectors. At least one of the electrical connectors can protrude outwards from the connection housing. At least one of the electrical connectors can have a first side, which is preferably a supply side, and a second side, which is preferably the lighting unit side. The first side of can be located outside of the connection housing. At least one of the electrical connectors can have a set of first manually operable actuators arranged to secure electrical wires to the first side of the electrical connector. The set of first manually operable actuators can be located outside of the connection housing.

The electrical connector can have a set of second manually operable actuators arranged to secure electrical wires to the second side of the electrical connector. The set of second manually operable actuators can be located within the connection housing.

At least some of the terminal blocks can be electrically connected to the second side of at least one of the electrical connectors, and preferably to a second side of a plurality of electrical connectors.

At least some of the terminal blocks can be electrically connected to at least one of the switching circuit and the driver by assembled electrical connections.

Embodiments of the invention will now be described by way of example only with reference to the drawings, wherein:
Figure 1 is an isometric view of a lighting assembly according to a first embodiment of the invention;
Figure 2 is a plan view from below of the lighting assembly shown in Figure 1;
Figure 3 is a side view of the lighting assembly shown in Figure 1;
Figure 4 is a cross-sectional view of the lighting assembly shown in Figure 1, through a vertical plane;
Figure 5 is a side view of a connector used in the lighting assembly of Figure 1;
Figures 6a to 6c each shows an internal part of the connector of Figure 5, and illustrates how an electrical wire is connected to the connector;
Figure 7 is a diagrammatic circuit diagram for the lighting assembly of Figure 1; and
Figure 8 shows an alternative connector arrangement to that shown in Figure 5.

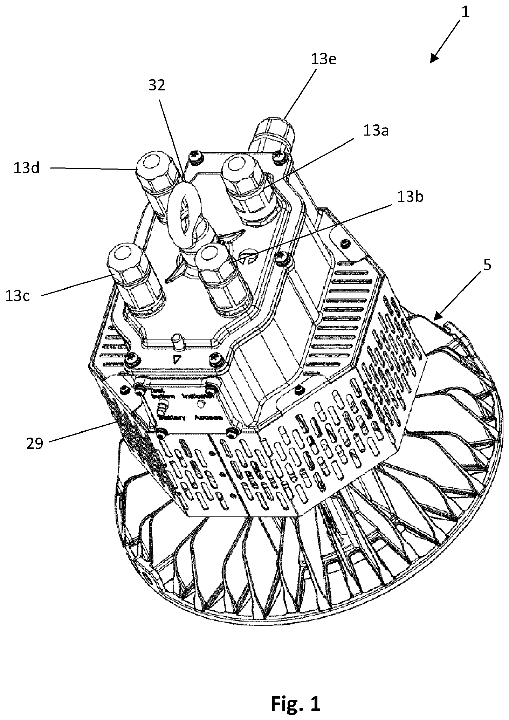

Figures 1 to 7 show a lighting assembly 1 according to a first embodiment of the invention. The lighting assembly 1 includes: at least one solid-state light source 3; a heatsink 5; a driver 7 arranged to convert a mains electrical signal to an electrical signal suitable for powering the solid-state light source 3; at least one electrochemical cell, which is typically a rechargeable battery 9; and a switching circuit 11. The lighting assembly 1 also includes a plurality of electrical connectors 13, which enable external electrical wires to be quickly and easily attached to the lighting assembly 1.

The solid-state light source 3 comprises at least one LED chip 15, and typically a plurality of LED chips 15. Each LED chip 15 can be mounted on a PCB 17, for example a metal core PCB (MCPCB). LED chips 15 can be distributed over the PCB 17. Typically, the solid-state light source 3 is arranged to produce at least 10,000 lumens, preferably at least 12,000 lumens, and more preferably still at least 15,000 lumens. Optical outputs at these levels help to make the lighting unit suitable for use to illuminate large spaces, such as in warehouses, factories, hangers, etc, in particular for use as a high bay lighting assembly.

The solid-state light source 3 is mounted on a front side of the heatsink 5. The heatsink 5 is made from a thermally conductive material, such as aluminium, and can include a number of fins 19, for example which extend radially outwards from a core 21. The solid-state light source 3 is mounted on to a front side of the core 21.

A transparent cover 23, such as a glass plate, is mounted in front of the solid-state light source 3. The transparent cover 23 is held in place by a retaining ring 25.

The lighting assembly includes a housing 27. The housing 27 houses the driver 7, and is hereinafter referred to as the driver housing. The driver housing 27 can be attached to a rear side of the heatsink 5, for example by screws. In some embodiments, an air gap 29 is provided between the rear side of the heatsink 5 and a proximal side of the driver housing 27 to at least partly thermally insulate the driver 7 from the heatsink 5.

The driver 7 can be of any suitable type. In some embodiments, the driver 7 is a dimmable driver. In other embodiments, a non-dimmable driver is used.

The lighting assembly includes a housing 31. The housing 31 is hereinafter referred to as the connection housing 31. The connection housing 31 houses the battery 9 and the switching circuit 11. The connection housing 31 can be connected to the driver housing 27, for example via a connection 33. For example, the connection housing 31 can include a connector portion 34, the driver housing 27 can include a connector portion 35, and the connector portions 34,35 can be connected together, for example via at least one screw. In some embodiments, the connector portions 34,35 are located centrally.

Each electrical connector 13 is arranged to electrically connect wires together, and is of a type where fast wire connection is possible. Each electrical connector 13 has a body 43 having first and second sides 43a,43b. The body 43 can be arranged such that the first side 43a is a supply side and the second side 43b is the lighting assembly side. The body 43 includes a plurality of axial cavities 45, for example first, second, third and fourth axial cavities 45. Some connectors 13 may have a different number of axial cavities 45, for example some connectors 13, may include first, second and third axial cavities 45, of first and second axial cavities 45.

Each axial cavity 45 includes a respective electrically conductive member 47. Each electrically conductive member 47 is elongate, and has a first end 47a that is resiliently deformable, which is located at a first side 43a of the body, and a second end 47b that is resiliently deformable and located at a second side 43b of the body. Each electrically conductive member 47 is provided a first manually operable actuator 49a which is arranged to resiliently deform the first end 47a of the conductive member, and a second actuator 49b which is arranged to resiliently deform the second end 47b of the conductive member. The first actuator 49a comprises a first lever that is pivotally attached to the first side of the body 43a. The second actuator 49b comprises a second lever that is pivotally attached to the second side of the body 43b.

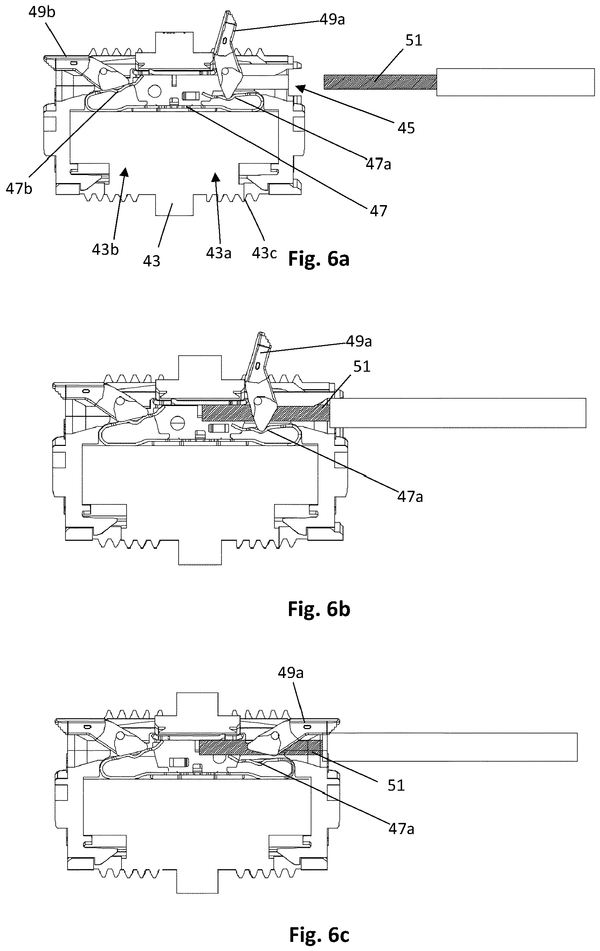

Each of the first levers 49a is pivotable to a first position, wherein the first end 47a of the conductive member is loaded by the first lever 49a. This loading causes the first end 47a of the conductive member to resiliently deform thereby allowing a wire 51, typically an external wire, to be inserted into the respective cavity 45 (see Figures 6a and 6b) at a first side 43a of the body. Each of the first levers 49a is pivotable to a second position, wherein the loading on the first end 47a of the conductive member is released. Removing the load causes the first end 47a of the conductive member to grip the wire 51, thereby forming an electrical connection between the wire 51 and the conductive member 47.

Each of the second levers 49b is pivotable to a first position, wherein the second end 47b of the conductive member is loaded by the second lever 49b. This loading causes the second end 47b of the conductive member to resiliently deform thereby allowing a wire, typically an internal wire, to be inserted into the respective cavity 45, in a similar fashion to that shown in Figures 6a and 6b, at a second side 43b of the body. Each of the second levers 49b is pivotable to a second position, wherein the loading on the second end 47ba of the conductive member is released. Removing the load causes the second end 47b of the conductive member to grip the wire, thereby forming an electrical connection between the wire and the conductive member 47.

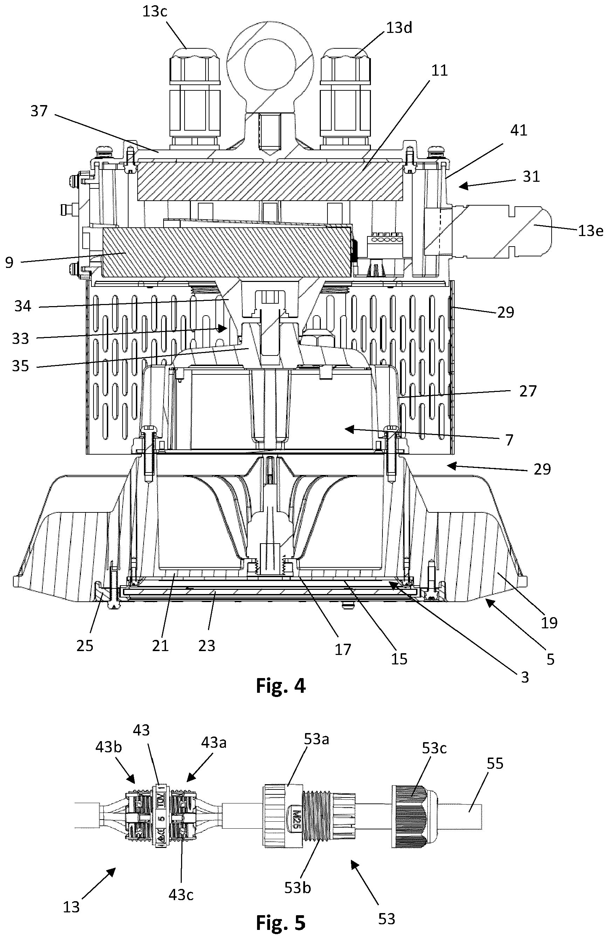

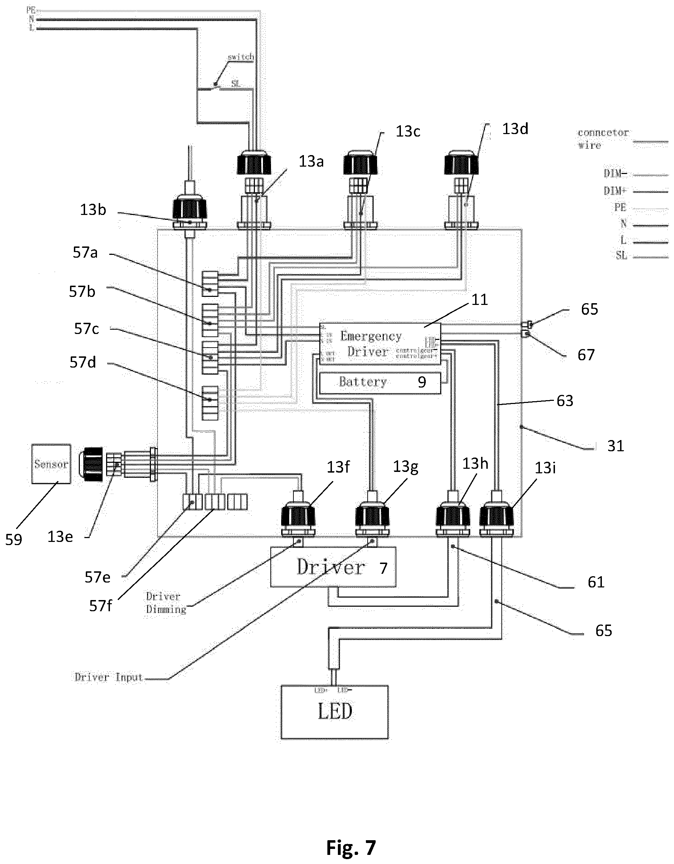

The electrical connectors 13 are attached to the connection housing 31, and protrude outwards therefrom in a manner such that at least the first side 43a of the body 43 and the first actuators 49a are located outside of the connection housing 31, as shown in Figures 4 and 7.

Thus, when the external electrical cables are prepared for installation, electrical connections can be made between internal wires of the lighting assembly and external wires very quickly without the need for tools.

The second side 43b of the body and the second actuators 49b are located inside the connection housing 31.

Each electrical connector 13 can include at least one cable grip 53, sometimes referred to as a "gland" to secure an electrical cable 55 to the connector 13. The cable grip 53 is arranged to prevent the wires 51 from being pulled out of their respective cavities 45 when a tensile load is applied to the electrical cable 55. The cable grip 53 includes a first part 53a, which includes an internal screw thread at a first end, which is arranged to mate with an external screw thread 43c formed on the first side 43a of the body, and an external screw thread 53b. The cable grip 53 includes a second part 53c, which includes an internal screw thread, which is arranged to mate with the external screw thread 53b of the first part of the cable grip. When the first part 53a of the cable grip is screwed on to the connector body 43, and the second part 53c of the cable grip is screwed on to the first part 53a of the cable grip, tensile loads can be transferred to connector body 43 via an electrical cable sheath, rather than loading the electrical wires 51.

The lighting assembly 1 includes an electrical connector 13a arranged to receive, at its first side, a mains electrical cable, typically having live, neutral, switch live and earth wires.

The lighting assembly 1 can include an electrical connector 13b arranged to receive, at its first side, a dimming electrical cable, typically having low voltage positive and low voltage negative wires, for example from a 1V-10 V dimming circuit.

The lighting assembly 1 can include an electrical connector 13c arranged to receive, at its first side, a loop in/loop out electrical cable, typically having live, neutral, switch live and earth wires.

The lighting assembly 1 can include an electrical connector 13d arranged to receive, at its first side, an alternative switch live electrical cable, typically having neutral, switch live and earth wires.

The lighting assembly 1 can include an electrical connector 13e for a sensor electrical cable, typically having low voltage positive and low voltage negative wires.

An advantage of the invention is that all of the lighting assembly internal wiring is installed at the time that the lighting assembly is manufactured and assembled, for example in a factory. That is, the internal wiring is pre-wired before installation takes place. Accordingly, when the lighting unit is installed, the installer simply has to connect the external wiring to the appropriate electrical connector 13a-e. As indicated previously, this is a fast process and does not require any tools to achieve when the external electrical cables have been prepared for connection.

An example of a typical wiring arrangement is shown in Figure 7.

Figure 7 shows the electrical connectors 13a-e; a live terminal block 57a; a switch live terminal block 57b; a neutral terminal block 57c; an earth terminal block 57d; positive low voltage terminal block 57e; a negative low voltage terminal block 57f; the battery 9; switching circuit 11 (referred to as "emergency driver"); the driver 7; and LED chips 15. Optionally, the system can include a sensor 59, such as a motion and/or light sensor. The terminal blocks 57a-f are located in the connection housing 31.

The electrical connector 13a for the mains electrical cable is electrically connected, at its second side, to the live terminal block 57a, the switch live terminal block 57b, the neutral terminal block 57c, and the earth terminal block 57d.

The electrical connector 13b for the dimming electrical cable is electrically connected, at its second side, to the positive low voltage terminal block 57e and the negative low voltage terminal block 57f.

The electrical connector 13c for the loop in/loop out electrical cable is electrically connected, at its second side, to the live terminal block 57a, the switch live terminal block 57b, the neutral terminal block 57c, and the earth terminal block 57d. The loop in/loop out port is arranged to electrically connect the lighting assembly 1 to another lighting assembly.

The electrical connector 13d for the alternative switch live circuit electrical cable is electrically connected, at its second side, to the switch live terminal block 57b, the neutral terminal block 57c, and the earth terminal block 57d.

The electrical connector 13e for the sensor electrical cable is electrically connected, at its second side, to the live terminal block 57a, the switch live terminal block 57b, the neutral terminal block 57c, positive low voltage terminal block 57e and the negative low voltage terminal block 57f. The sensor 59 is arranged to detect movement and/or light, for example to detect people moving in a space below the lighting assembly and/or ambient light. The sensor 59 can be a microwave sensor, however any other suitable type of sensor can be used. The sensor 59 is mounted externally of the housings 27,31. Some embodiments do not include the sensor 59.

The switching circuit 11 is electrically connected to the live terminal block 57a, the switch live terminal block 57b, and the neutral terminal block 57c, to power the switching circuit 11. The switching circuit 11 is electrically connected to the driver 7 by live and neutral wires via an electrical connector 13g. Thus, in the arrangement shown in Figure 7, a mains input signal is provided to the driver 7 via the switching circuit 11.

The switching circuit 11 is electrically connected to the battery 9. When a mains input signal is available, the switching circuit 11 charges the battery 9.

The driver 7 is electrically connected to the positive low voltage terminal block 57e and the negative low voltage terminal block 57f via an electrical connector 13f, and is arranged to receive dimming control signals therefrom. Since the sensor 59 is also electrically connected to the positive low voltage terminal block 57e and the negative low voltage terminal block 57f, the driver 7 receives signals from the sensor 59. This enables the driver 7 to determine if people are moving below the lighting assembly 1.

The output 61 from the driver 7 is electrically connected to the LED chips 15 via the switching circuit 11. The output 61 from the driver 7 is electrically connected to the switching circuit 11 via an electrical connector 13h. An output 63 from the switching circuit 11 is electrically connected to the LED chips 15 via an electrical connector 13i.

In normal operation, when the lighting assembly is powered from the mains. A mains input signal is provided to the driver 7 via the switching circuit 11. The driver 7 converts the mains input signal to an output signal that is suitable for use by the LED chips 15. For embodiments including the sensor 59, the output signal is selectively supplied to the LED chips 15 according to signals received from the sensor 59. For example, if the driver 7 determines from the signals received from the sensor 59 that the space below the lighting assembly is unoccupied and/or the measured ambient light level value is higher than or equal to a high threshold value, the driver 7 automatically switches off the LED chips 15 to save energy. If the driver 7 determines from the signals received from the sensor 59 that the space below the lighting assembly is occupied and/or the measured ambient light level value is lower than or equal to a low threshold value, the driver 7 powers the LED chips 15 to illuminate the space below.

The switching circuit 11 is arranged to detect a loss of the mains input signal to the driver 7 and/or a loss of output signal from the driver, and in response to said detection, is arranged to provide electrical power from the battery 9 to power the LED chips 15. In this manner, the lighting assembly 1 functions as an emergency light, which is capable of illumination in the event of a loss of mains power. The emergency light enables people in the building to continue their tasks or to exit the building as required.

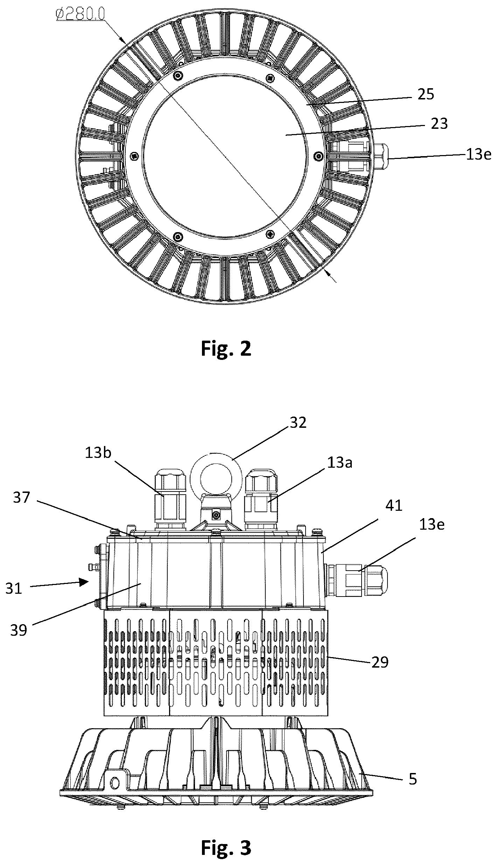

At least some of the electrical connectors 13 can be attached to the connection housing 31. At least some of the electrical connectors 13 have a first side that protrudes outwards from the connection housing 31, for easy access for the installer. As shown in Figure 1, some electrical connectors 13a-d are attached to an upper wall 37 of the connection housing. The upper wall 37 is connected to side walls 39 by screws, and is therefore releasably attachable to the side walls 39. Another electrical connector 13e is attached to an end wall 41 of the connection housing (see Figures 3 and 4).

Ahanging eye 32 is attached to the upper wall 37 of the connection housing. The hanging eye can be made from stainless steel.

A tubular shroud 29 is mounted around the driver housing 27. The tubular shroud 29 is attached to the connection housing 31, and depends downwards therefrom in a manner such that it surrounds the driver housing 27. The tubular shroud 29 includes a multiplicity of holes 31 formed through its thickness to encourage air flow around the driver housing 27, for thermal management purposes. The shroud 29 also helps to visually obscure internal electrical cables. Typically, the tubular shroud 29 is mounted co-axially with the driver housing 27.

The switching circuit 11 can include a testing button 65 and an indicator light 67 to manually test the operational status of the battery 9. The testing button 65 and indicator light can be attached to the connection housing 31, for example to an end wall 69 of the connection housing.

Advantages of the invention include:
- The lighting assembly having assembled wiring in the connection housing provides all the required internal wiring for the high bay lighting assembly, dispensing the need of additional terminal boxes & connectors, significantly simplifying the electrical installation;
- The lighting assembly provides tool-free, screwless, externally accessible quick-connectors, reducing electrical installation time, in some cases to less than 1 minute;
- The lighting assembly provides fully functional wiring built-in for:
   o mains loop-in/loop-out (terminals L, SL, N, E);
   o switch live available either from 4 core mains cable, or from a remote switch live cable;
   o Microwave sensor connection (terminals L, N, SL, 1-10V +, 1-10V -), or other types of sensor, for example daylight harvesting sensors;
   o 1-10V dimming from external circuit and loop-out to adjacent high bay lighting assemblies;
- The lighting assembly provides a Master-Slave high-bay system, by using a single microwave sensor connected and fully controlling numerous high-bays, through the wiring hub;
- The lighting assembly provides a single unit, compact high-bay emergency light, avoiding installation of emergency kit separately for the high-bay light.
- Side panel 31 allows access to battery for commissioning and maintenance.
- The lighting assembly provides balanced weight distribution, mitigating high-bay tilt when installed and suspended;
- The lighting assembly provides an emergency inverter and battery mounted in a dedicated enclosure, apart from the LED heatsink and driver, providing optimal heat dissipation and consequently reducing enclosure dimensions;
- The tubular shroud, provides optimum air circulation around the driver, at the same time it provides enhanced mechanical protection to the cables;
- The lighting assembly provides a self-test emergency module, automatically monitoring the battery and inverter, meeting the standards criteria;
- The lighting assembly provides self-test emergency unit allows central test control using switch;
- The lighting assembly provides an external emergency test-button, allowing emergency functional test when installing the unit, as well as resetting the internal emergency self-test clock;
- The lighting assembly provides an eyelet to hang high-bay from a chain.

It will be appreciated by the skilled person that modifications can be made to the above embodiments that fall within the scope of the invention, for example the internal wiring shown in Figure 7 can have a different layout. However, for each different wiring arrangement the internal wiring is installed when the lighting assembly is manufactured and assembled.

A different number of electrical connectors 13 can be included. The lighting assembly can include any practicable number of electrical connectors 13. Typically, the lighting assembly includes at least two electrical connectors 13.

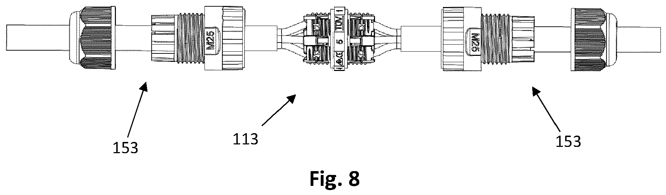

At least one of the electrical connectors can include a cable grip on the lighting assembly side, for example in addition to the cable grip on the supply side. An electrical connector 113 having this arrangement is shown in Figure 8. The electrical connector 113 is similar to the electrical connector 13, except that it includes a cable grip 114 on the second side.

Some embodiments do not include the sensor 59. In these embodiments, the driver output signal is continuously supplied to the LED chips 15 in normal operation, that is, while a mains input signal is supplied to the lighting assembly 1.

For at least one of the electrical connectors, instead having levers for quickly attaching wires to the first (supply) side of the connector, the connector can have screw elements to secure the wires to respective electrical conductors.

For at least one of the electrical connectors, instead having levers for quickly attaching wires to the second (device) side of the connector, the connector can have screw elements to secure the wires to respective electrical conductors.

In some embodiments, the conductive elements in the electrical connectors are not resilient, or do not include a resilient first end. In some embodiments, the conductive elements in the electrical connectors do not include a resilient second end. For example, for an electrical connector having screw elements for attaching wires to conductive elements at the first side, the first end of the conductive element may not be resilient. For an electrical connector having screw elements for attaching wires to conductive elements at the second side, the second end of the conductive element may not be resilient.

In some embodiments, the driver is a non-dimming driver.

The switching circuit can be arranged to self-test in addition, or as an alternative, to manual testing.

The sensor connector can be removed and replaced by a plug, for customers that do not use sensors.

The electrical connectors can be reconfigured to meet customers' needs.

The hanging eye can be made from different stainless steel alloys or models, suiting all environments and customers' needs.

The lighting assembly can include a formation that is arranged to engage with a beam formation, thereby suspending the lighting assembly from the beam. This enables the lighting assembly to be surfaced mounted to a beam. The lighting assembly can include a formation that is arranged to engage with a trunking formation, thereby suspending the lighting assembly from trunking. This enables the lighting assembly to be surfaced mounted to trunking.

Additional electronics can be integrated into the lighting assembly, for example by providing at least one further electrical connector.

The description presents exemplary embodiments and, together with the drawings, serves to explain principles of the invention. However, the scope of the invention is not intended to be limited to the precise details of the embodiments or exact adherence with all method installation steps, since variations will be apparent to a skilled person and are deemed also to be covered by the claims. Terms for components used herein should be given a broad interpretation that also encompasses equivalent functions and features. In some cases, several alternative terms (synonyms) for structural features have been provided but such terms are not intended to be exhaustive.

Descriptive terms should also be given the broadest possible interpretation; e.g. the term "comprising" as used in this specification means "including" such that interpreting each statement in this specification that includes the term "comprising", features other than that or those prefaced by the term may also be present. Related terms such as "comprise" and "comprises" are to be interpreted in the same manner. Directional terms such as "vertical", "horizontal", "up", "down", "upper" and "lower" may be used for convenience of explanation usually with reference to the illustrations and are not intended to be ultimately limiting if an equivalent function can be achieved with an alternative dimension and/or direction.

The description herein refers to embodiments with particular combinations of configuration steps or features, however, it is envisaged that further combinations and cross-combinations of compatible steps or features between embodiments will be possible. Indeed, isolated features may function independently as an invention from other features and not necessarily require implementation as a complete combination. Any feature from an embodiment can be isolated from that embodiment and included in any other embodiment.

The term "at least one of' is to be interpreted in the sense of "and/or". For example, the term "at least one of the first connector and the second connector" is to be interpreted as meaning any one of the following: the first connector alone; the second connector alone; or the combination of the first and second connectors. As another example, the term "at least one of the first connector, the second connector and the third connector" is to be interpreted as meaning any one of the following: the first connector alone; the second connector alone; the third connector alone; the combination of the first connector and the second connector; the combination of the first connector and the third connector; the combination of the second connector and the third connector; or the combination of the first connector, the second connector and the third connector.

## Claims

1. A high bay lighting unit, including:
at least one solid-state light source (3), which is arranged to output at least 10,000 lumens in normal operation;
a heatsink (5) arranged to conduct heat away from the solid-state light source (3);
a driver housing (27) mounted to a rear side of the heatsink (5);
a driver (7) arranged to convert a mains input signal to an output signal that is suitable for powering the at least one solid-state light source (3), wherein the driver (7) is located within the driver housing (27);
at least one electrochemical cell (9);
a switching circuit (11) arranged to detect loss of a mains input signal and/or loss of an output signal from the driver (7), and in response to detecting loss of a mains input signal and/or loss of an output signal from the driver (7), the switching circuit (11) is arranged to provide power to the at least one solid-state light source (3) from the at least one electrochemical cell (9);
a connection housing (31) for housing the at least one electrochemical cell (9), the switching circuit (11), and a plurality of terminal blocks (57a-f), wherein the connection housing (31) is mounted to a rear side of the driver housing (27);
a plurality of electrical connectors (13) protruding outwards from the connection housing (31), each electrical connector (13) having a first side (43a), which is a supply side, and a second side (43b), which is the lighting unit side, and a set of first manually operable actuators (49a) arranged to secure electrical wires to the first side (43a) of the electrical connector, wherein the first side (43a) of each electrical connector and the set of first manually operable actuators (49a) are located outside of the connection housing (31); and
wherein at least some of the terminal blocks (57a-f) are electrically connected to the second side (43b) of at least one of the electrical connectors, and to at least one of the switching circuit (11) and the driver (7) by assembled electrical connections.

2. The lighting unit according to claim 1, including an air gap (29) between the heatsink (5) and driver housing (27).

3. The lighting unit of any one of the preceding claims, including a sensor (59) that is arranged to detect at least one of movement and light level.

4. The lighting unit of any one of the preceding claims, wherein at least one of the electrical connectors (13) includes a set of second manually operable actuators (49b) arranged to secure electrical wires to the second side (43b) of the electrical connector.

5. The lighting unit of claim 4, wherein the set of second manually operable actuators (49b) are located within the connection housing (31).

6. The lighting unit of any one of the preceding claims, wherein each electrical connector (13) includes a body having a plurality of axial cavities (45), each axial cavity (45) includes a respective electrically conductive member (47) that includes a first end (47a), and the first end (47a) is located at the first side (43a) of the body.

7. The lighting unit of claim 6, wherein the first end (47a) of the respective electrical conductor is resiliently deformable.

8. The lighting unit of claim 7, wherein each electrically conductive member (47) is provided with a respective one of the first manually operable actuators (43a) that is movable to a first position, wherein the respective first end (47a) of the conductive member is loaded by the respective first manually operable actuator (49a) thereby resiliently deforming the respective first end (47a) of the respective conductive member to allow a wire to be inserted into the respective cavity (45) at a first side (43a) of the body; and to a second position wherein the load on the respective first end (47a) of the conductive member is released thereby causing the respective first end (47a) of the respective electrically conductive member to engage the wire inserted into the respective cavity (45) at the first side (43a) to form an electrical connection between the wire and the respective electrically conductive member (47).

9. The lighting unit according to any one of claims 6 to 8, wherein the respective electrically conductive member (47) includes a second end (47b), which is located at the second side (43b) of the body.

10. The lighting unit according to claim 9, wherein the second end (47b) of the respective electrically conductive member is resiliently deformable.

11. The lighting unit of claim 10, when dependent on claim 4, wherein each electrically conductive member (47) is provided with a respective one of the second manually operable actuators (49b) that is movable to a first position, wherein the respective second end (47b) of the conductive member is loaded by the respective second manually operable actuator (49b) thereby resiliently deforming the respective second end (47b) of the conductive member to allow a wire to be inserted into the respective cavity (45) at a second side (43b) of the body; and to a second position wherein the load on the respective second end (47b) of the conductive member is released thereby causing the respective second end (47b) of the electrically conductive member to engage the wire inserted into the respective cavity at the second side (43b) to form an electrical connection between the wire and the respective conductive member (47).

12. The lighting unit according to any one of the preceding claims, wherein each first manually operable actuator (49a) comprises a lever; and/or each second manually operable actuator (49b) comprises a lever.

13. The lighting unit of any one of the preceding claims, wherein the switching circuit (11) is electrically connected to the driver (7).

14. The lighting unit of any one of the preceding claims, wherein an output signal from the driver (7) is delivered to the solid-state light source (3) via the switching circuit (11).

15. The lighting unit of any one of the preceding claims, wherein an output cable (61) from the driver (7) is electrically connected to the second side of a further electrical connector (13h), and a cable from the switch circuit (11) is electrically connected to a first side of the further electrical connector (13h); and a cable (63) from the switch circuit (11) is electrically connected to the first side of a yet further electrical connector (13i), and an electrical cable (65) from the solid-state lighting unit (3) is electrically connected to a second side of the yet further connector (13i).

16. The lighting unit of any one of the preceding claims, including a tubular shroud (29) mounted about the driver housing (27).

17. The lighting unit of any one of the preceding claims, including a hanging eye (32) that is arranged to support the weight of the lighting unit.

18. The lighting unit of any one of the preceding claims, wherein the at least one solid-state light source produces at least 12,000 lumens during normal operation, and preferably produces at least 15,000 lumens, during normal operation.
